# EUROPEAN PATENT SPECIFICATION

(11) **EP 3 023 925 B1**
(45) Date of publication and mention of the grant of the patent: **28.08.2019**
(21) Application number: 14306838.5
(22) Date of filing: 19.11.2014
(51) Int. Cl.: G06Q 20/34, G07F 7/08, G06F 21/77

(54) **Secure element with applications**
Sicheres Element mit Anwendungen
Élément sécurisé avec des applications

(43) Date of publication of application: 25.05.2016
(73) Proprietor: IDEMIA France, 92400 Courbevoie (FR)
(72) Inventor: Martin-Martinasso, Ludovic, 92700 Colombes (FR); Bequer, Yannick, 92700 Colombes (FR)
(74) Representative: Santarelli

(56) References cited:
- WO-A1-02/42912
- US-B1- 8 196 131
- "The Vault. Time for eGovernment to Muscle up!", , 1 May 2013 (2013-05-01), XP055125952, Retrieved from the Internet: URL:http://silicontrust.files.wordpress.co m/2013/05/sn_the_vault_12_20130506_screen. pdf [retrieved on 2014-06-30]

## Description

### BACKGROUND

It is desirable that security-critical applications, such as banking applications, are executed by a secure element. The secure element is a chip which comprises a processor and memory for storing an application. The secure element provides a secure environment in which the application can be executed. The chip can form part of a chip card (smart card) or the chip may be embedded in a host device such as a wireless terminal.

There are several existing ways in which the secure element can be provided with an application and an operating system. The secure element's operating system can be stored in a read only memory (ROM) of the chip card during chip manufacture. This can be achieved using a photomask, and the resulting memory is sometimes referred to as masked ROM, and the process as 'masking'. Once masked ROM is created, the contents of the ROM cannot be changed. An application, such as a particular banking application, can be stored in the ROM as part of the masking process.

In the banking industry several different applications, such as VISA and MASTERCARD applications, cover a large part of the market. Each client (e.g. VISA or MASTERCARD) requires a card having their own specific application. A disadvantage of ROM-based storage is that it requires a manufacturer to make chip cards for specific end clients. An alternative approach is for the silicon manufacturer to mask more than one banking application in a chip. Most bank cards, once issued, only need a single banking application. Therefore, for cards that use generic chips masked with several applications, one or more applications is left unused. The cost of the unused memory is justified by the economies gained in stock handling. Chips which store more than one banking application can be called generic banking application chips.

An alternative approach is to write applications into a rewriteable form of non-volatile memory, such as flash memory. A chip manufacturer can produce generic banking application chips based on flash memory. Multiple banking applications and an operating system are written into the Flash memory even though only one application may be used in an issued card.

The international publication WO 02/42912 discloses a low storage capacity portable electronic object, such as a smart card, wherein a software component located in an external library may be invoked by the object and loaded onto the object when the size of its available storage permits, otherwise the state of an element of the application previously loaded is erased after saving its state in the object, so as to clear storage space.

The patent US 8,196,131 discloses managing the lifecycle of a card software application received from a remote trusted service manager for a secure element of a contactless smart card. A card application comprising account information and an application identifier AID, as well as an instruction for performing a function on the card application are received from the trusted service manager. A control application of the secure element registers the card application using the AID, and comprises a list of AIDs of previously received and registered card software applications, and a card application status tag for each of the listed AIDs.

The document "The Vault. Time for eGovernment to Muscle up!" discloses a "just in time" approach wherein only one software module is written on a chip at the end of the manufacturing cycle, saving program memory and allowing the product to be fully manufactured in a uniform manner. Only authorized users can "Flash" the chip, using mandatory user authentication, and only the required applications are download in the same memory as the rest of the code.

### SUMMARY

An aspect of the invention provides a method of preparing a secure element, the method comprising: receiving a secure element in the form of a chip comprising a processor and a non-volatile, re-writable, memory on which have been stored at least a first application in a first portion of the memory and a second application in a second portion of the memory; invoking code stored in the secure element to: recover a memory portion occupied by a selected one of the first application and the second application, leaving a remaining application in the memory; and make the recovered memory portion available for storage of other data.

The method may further comprise preventing a further invocation of the code.

The preventing may comprise removing the code from the secure element.

The preventing may comprise changing a permission of the code.

The secure element may maintain an access right for the memory portions occupied by each of the applications, the access right prohibiting write access to the memory portions occupied by the applications before invoking the code. Invoking the code may change the access right for the memory portion occupied by the selected application to permit write access.

Invoking the code may cause over-writing of the selected one of the first application and the second application with dummy data.

The secure element may store an indication of parts of the memory which are available for storage of data and invoking the code updates the indication to include the recovered memory.

The code may form part of an operating system of the secure element.

N applications may be stored in the memory of the received secure element, and invoking the code stored in the secure element may recover memory portions occupied by N-1 of the applications, leaving a remaining application in the memory.

The method may be performed as part of a pre-personalisation process of the secure element.

The method may further comprise personalisation of the secure element by, at least one of: storing data personalised to an end user of the secure element; storing a security key personalised to an end user of the secure element.

Before recovering a memory portion occupied by a selected one of the first application and the second application, the memory can have a size which is sufficient to store a master file but insufficient to store a file system. Invoking the code stored in the secure element recovers a memory portion which provides sufficient space to store the file system.

The method may further comprise writing data to at least part of the recovered memory portion.

Writing data to the recovered memory portion may include at least one of: writing a file system to the memory; writing a security key to the memory.

Another aspect of the invention provides a method comprising: receiving a secure element in the form of a chip comprising a processor and a non-volatile, re-writable, memory; writing at least a first application to a first portion of the memory and a second application to a second portion of the memory; writing code to the secure element to allow recovery of a memory portion occupied by a selected one of the first application and the second application, leaving a remaining application in the memory and to make the recovered memory portion available for storage of other data. This aspect can be performed by a fabricator of the chip or secure element.

Another aspect of the invention provides a secure element in the form of a chip comprising: a processor; and a non-volatile, re-writable, memory on which have been stored at least: a first application in a first portion of the memory; and a second application in a second portion of the memory; the secure element further comprising code to allow recovery of a memory portion occupied by a selected one of the first application and the second application, leaving a remaining application in the memory and to make the recovered memory portion available for storage of other data.

The secure element may be a smart card.

The non-volatile, re-writable, memory may be Flash memory.

An advantage of at least one embodiment is that the secure element can be provided with a smaller memory, which can reduce cost of the secure element. For example, the memory recovered from one of the applications can be used to store additional files required to personalise the secure element. Conventionally, a secure element would require a memory having a capacity sufficient to store the multiple applications as well as the additional files. In contrast, a secure element in accordance with an embodiment may have a memory which only has a capacity sufficient to store the two applications, with one of the applications being removed during initialisation to provide space for the additional files.

An advantage of at least one embodiment is that it is possible for a manufacturer to produce generic chips, which makes stock handling easier and can reduce production costs.

An advantage of at least one embodiment is that a manufacturer only required to write a single certified operating system and suite of applications, which simplifies the handling of the load files and reduces errors.

An advantage of at least one embodiment is that a customer can have a single source of supply for a secure element which has the capability to be used by a plurality of different customers, thereby reducing the unit cost of the secure element.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect of the invention provides machine-readable instructions (software) which, when executed by a processor, perform any of the described or claimed methods. The machine-readable instructions may be stored on an electronic memory device, hard disk, optical disk or other machine-readable storage medium. The machine-readable medium can be a non-transitory machine-readable medium. The term "non-transitory machine-readable medium" comprises all machine-readable media except for a transitory, propagating signal. The machine-readable instructions can be downloaded to the storage medium via a network connection.

### BRIEF DESCRIPTION OF THE DRAWINGS

Embodiments of the invention will be described, by way of example only, with reference to the accompanying drawings in which:
Figure 1 schematically shows a secure element;
Figure 2A shows a secure element in a chip card;
Figure 2B shows a secure element in a host device;
Figure 3 shows a memory and a memory management unit;
Figure 4 shows a method of manufacturing and initialising a secure element;
Figure 5 shows a first example of a memory at various stages of the method of Figure 3;
Figure 6 shows a second example of a memory at various stages of the method of Figure 3;
Figures 7A and 7B show a first way of disabling code for recovering memory;
Figures 8A and 8B show a second way of disabling code for recovering memory.

### DETAILED DESCRIPTION

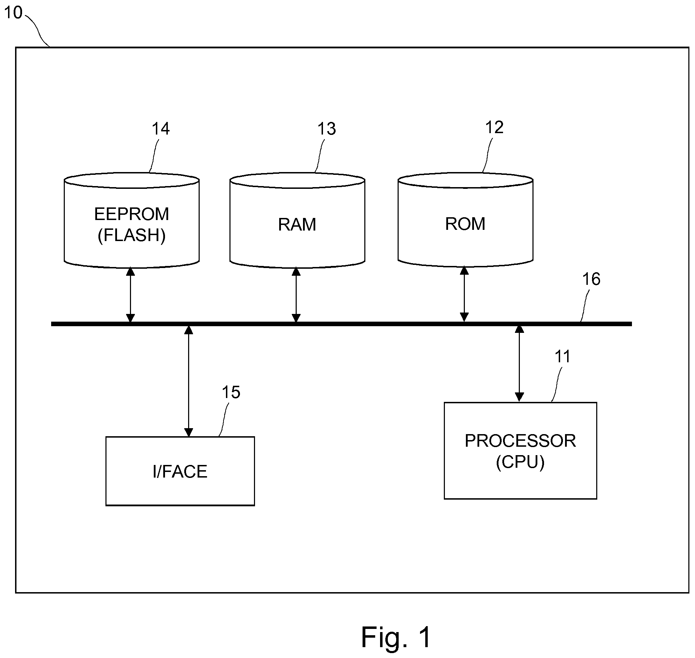

Figure 1 shows an example of a secure element 10. The secure element 10 comprises a chip (integrated circuit) having a processor (CPU) 11 and storage. The storage can comprise read only memory (ROM) 12, random access memory (RAM) 13 and Flash memory 14. One or more buses 16 communicatively couple functional units 11-15 of the secure element.

The processor 11 may be a microcontroller, microprocessor or any other suitable type of processor for executing instructions. Processor-executable instructions can be stored in ROM 12 and/or Flash memory 14. Flash memory is a type of Electrically Erasable Programmable Read-Only Memory (EEPROM) with a much shorter write time than other types of EEPROM, hence the name "flash". Flash memory is also more compact than other types of EEPROM because a cell of flash memory occupies a smaller surface area than a comparable cell of other types of EEPROM. The processor-executable instructions can include instructions for implementing an operating system of the processor 11. The processor-executable instructions can include instructions for implementing an application, such as a banking application. An interface 15 supports communication between the secure element 10 and an external device.

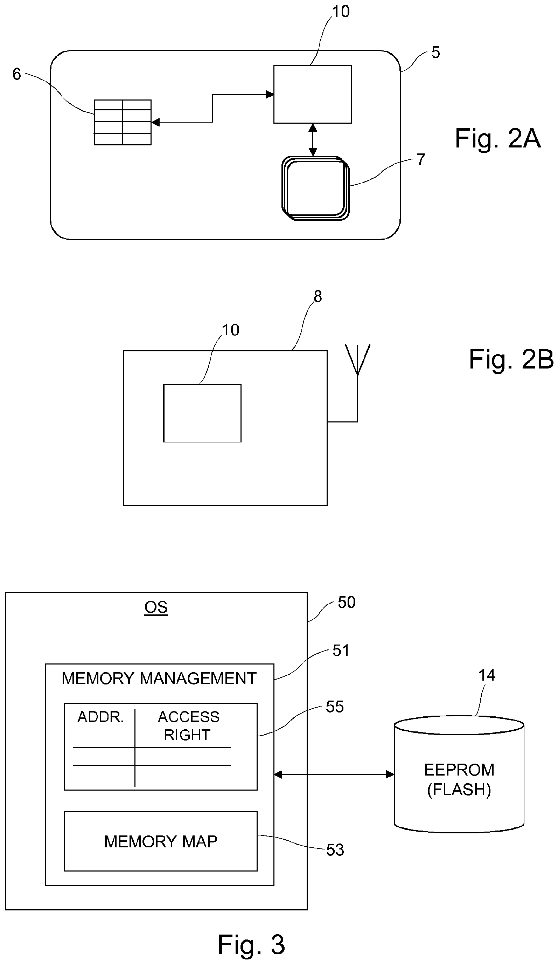

Figures 2A and 2B shows two possible examples of how the secure element can be used. Figure 2A shows a chip card 5, also called a smart card. The secure element 10 is embedded within the chip card 5. The chip card 5 can be a contact card. A contact card comprises a set of electrical contact terminals 6 on a face of the card 5 for communicating with a reader, such as a point-of-sale terminal. The interface 15 of the secure element 10 connects to the contacts 6. The chip card 5 can be a contactless card. A contactless card can support near field communication (NFC) and comprises an antenna 7 embedded within the card 5. Interface 15 of the secure element 10 connects to the antenna 7. A chip card 5 can be a contact card or a contactless card, or it can be both a contact card and a contactless card.

Figure 2B schematically shows the secure element 10 forming part of a host device 8, such as a wireless terminal. The secure element 10 may be permanently embedded within the host device 8, such as being permanently bonded to a circuit board of the host device 8. Alternatively, the secure element 10 may be provided as a miniature card which is insertable into, and removable from, the host device 8. The interface 15 of the secure element 10 can electrically connect to other parts of the host device 8.

Figure 3 schematically shows a memory management unit (MMU) or a memory protection unit (MPU) 51 which is used by the processor 11 of the secure element 10. Conveniently, the MMU/MPU 51 can form part of an operating system 50 of the secure element 10. All CPU accesses pass through the MMU/MPU 51. The memory management unit 51 can maintain a table 55 of access rights for locations in the physical memory. Before the CPU loads the content of a given address, there is a lookup in the access rights table 55. Any attempt to access an address in a manner which is prohibited by the access rights held by the MMU will raise an exception. For example, attempting to write to an address which has the access right of read only (RO) or read and execute only (r-x) will raise an exception. The memory management unit 51 can maintain a memory map 53 which maps logical memory (e.g. a logical list of files) to physical addresses in the memory. The memory map 53 holds records with, for example, the following fields: "starting address"; "length"; (or "segment number" instead of "starting address" and "length"). The records held by the memory map 53 may also indicate "access rights". Although the MMU 51 is shown as part of the operating system 50, it may be implemented in hardware with information loaded by the operating system 50. For example, an access rights table 55 can be loaded into the MMU 51 as part of the processor's start up sequence. The memory map 53 is modifiable by the operating system. The access rights table 55 is modifiable by the operating system. The MMU 51 may alternatively form part of the memory 14 or some other part of the secure element 10.

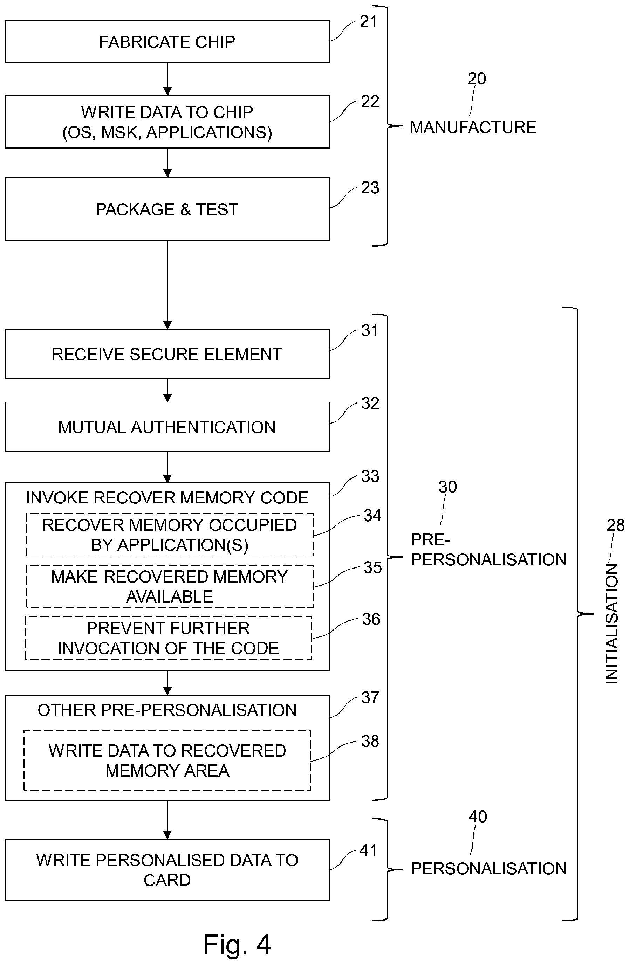

Figure 4 shows an overview of an overall method of manufacturing a secure element and preparing the secure element for use. The method is divided into two main stages: manufacture 20 of the secure element and initialisation 28 of the secure element. Initialisation 28 can be sub-divided into pre-personalisation 30 and personalisation 40. Following initialisation 28, the card can be used by an end user.

The manufacturing stage 20 begins with fabrication 21 of a chip on a wafer. In a conventional manner, a large number of chips are formed at the same time on a wafer of semiconductor material, such as a silicon wafer. Conventional semiconductor processes such as masking and etching can be used to create the chips. As these processes are well known, no further explanation is required.

At some point during manufacture 20, data is written 22 to each of the chips. Data can be written to the chip while the chip is still on the wafer, or after the wafer has been divided into individual chips. For example, test probes can be used to write the data directly to the memory 14 of the secure element 10. At this point, multiple applications can be written to the Flash memory 14. Also, an operating system (OS) can be written to the Flash memory 14. If the OS and applications are not written directly, they can be written using a boot loader. The boot loader can be stored in ROM 12 or can be loaded directly. Once the operating system is loaded, all further communication with the chip passes via the operating system. A conventional operating system prohibits any part of the operating system and the application(s) from being overwritten. In accordance with an embodiment, code is stored on the chip which permits removal of a selected one of the applications. This can allow recovery of a portion of the memory occupied by that application. The term "recovery" is used in this specification to represent freeing the memory for use by other data. As explained below, the code is executed during the initialisation of the secure element 10.

Manufacture 20 also includes sawing the wafer into individual chips, and packaging and testing 23 of the chips. This concludes manufacture. The end product of manufacture 20 are secure elements 10 in form of chips which each have an operating system and multiple applications stored on them. These will be called generic secure application chips. They are "generic" in the sense that they can support multiple applications and are not specific to a particular application.

The memory can store a set of mutually exclusive applications (e.g. a VISA application and a MASTERCARD application). This set of mutually exclusive applications may be a subset of the total number of applications loaded onto the chip or may be the total set of applications loaded onto the chip. It is known in advance, before the operating system and applications are loaded onto the chip, that one and only one application from this set of mutually exclusive applications will be initialised before the card is issued. The set of mutually exclusive applications are "mutually exclusive" because only one of the applications will be used in the finalised secure element. Once an application has been assigned to the set of mutually exclusive applications, it is either: the only application of the set to be initialised, or it is never initialised. That decision is made during pre-personalisation 30 by using the recover memory code.

The memory 14 can also store one or more other applications which do not form part of the mutually exclusive set of applications. For example, a set of mutex banking applications.

Although manufacture 20 has been shown as one group of blocks, the blocks may be performed by different entities. For example, a chip fabricator may fabricate a semiconductor wafer of chips and a different entity may package the chips.

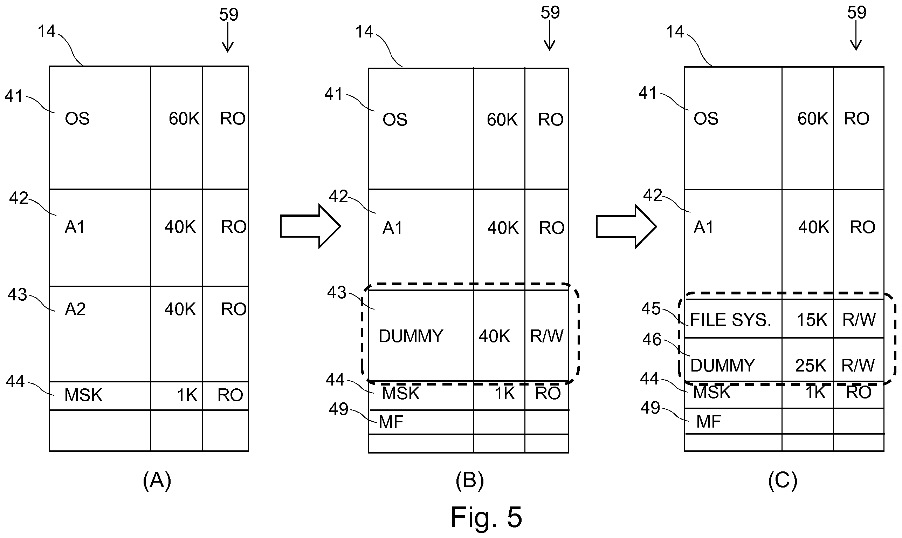

Figure 5 shows an example of Flash memory 14 following manufacture 20. The memory 14 has an operating system (OS) stored in a portion 41 of the memory, a first application (A1) stored in a portion 42 of the memory, a second application (A2) stored in a portion 43 of the memory and a security key (MSK) 44 stored in a portion 44 of the memory. Applications A1 and A2 are mutually exclusive. For clarity, the blocks of memory shown in Figure 5 are not drawn with correct relative sizes. For example, the master key is much smaller than an application A1, A2 or the OS.

Returning to Figure 4, following manufacture the chips are then prepared for use. In Figure 4 this is shown as initialisation 28. Initialisation 28 can comprise pre-personalisation 30 and personalisation 40. Typically, initialisation 28 will occur at a different location from manufacture 20. Typically, initialisation 28 will occur a period of time (possibly weeks or months) after manufacture 20. Initialisation begins, at block 31, by receiving secure elements in the form of chips. As described above, each chip is generic. Each chip has an operating system and multiple applications stored on it. It also has code which allows one application to be removed. During pre-personalisation, the chip is prepared for use. At block 32 a mutual authentication is performed between a personalisation machine and the card 10. The mutual authentication uses the MSK 44 stored on the card 10 and confirms that the chip is authentic. The mutual authentication command is specified in the ISO 7816 standard. Mutual authentication of two parties is also defined in ISO/IEC 9798.

Next, a recover memory process 33 is performed. The recover memory code stored on the chip 10 can be invoked as the first operation after a successful mutual authentication 32. The recover memory code recovers a memory portion occupied by a selected one of the applications which have already been stored on the chip and leaves a remaining application stored in the memory. The recover memory code operates upon the set of mutually exclusive applications to leave just one of the applications in the memory. For example, the set of mutually exclusive applications can comprise: a VISA application and a MASTERCARD application and the recover memory code removes one of the applications. The recover memory code makes the recovered memory available for the storage of other data 35. The recover memory code may cause the memory space which was occupied by the selected application to be overwritten with zeros, for example.

In a simplest example, the secure element received at block 31 has two applications stored in memory 14. The recover memory code removes one application, leaving one application remaining in the memory. In other examples, the secure element received at block 31 has more than two applications, such as three or more applications. Stated generally, where the secure element received at block 31 has N (mutually exclusive) applications (e.g. N= 2, 3, 4...), the recover memory code can remove (N-1) applications, leaving a single wanted application remaining in memory.

In any of the examples, the recover memory code can be invoked with a parameter indicating the application which is to be removed. Alternatively, the recover memory code can be invoked with a parameter indicating the application which is to remain in the memory. If there are more than two applications stored in the memory, the recover memory code can be invoked with a parameter indicating a list of the applications which are to be removed. Alternatively, the recover memory code can be invoked with a parameter just indicating the application which is to remain in the memory. There are various ways in which the code for removing an application can be executed. In one example, the code is invoked in the format of an ISO 7816 command, identified as a proprietary command. Such commands can be sent from a personalisation machine to the interface 15 of the secure element in transport-layer frames such as ISO 7816 Application Protocol Data Units (APDUs).

Before block 32, the applications stored in the memory have a read only access right. The access right can be maintained, or controlled by, the operating system of the secure element, or by some other logic on the secure element. As part of the invocation of the recover memory code 33, the access right of the application(s) requiring removal can be changed from an access right which prohibits write access (e.g. read only RO or read and execute only, r-x) to an access right which allows write access, e.g. read/write (R/W). As shown in Figure 3, the operating system 50 of the secure element can comprise a memory management unit 51 which maintains a memory map which maps logical memory (e.g. a logical list of files) to physical addresses in the memory. The memory management unit can also maintain access rights for locations in the physical memory.

As part of the invocation of the recover memory code 33, the recovered memory can be made available for storage of other data. This can involve changing an access right of the recovered memory to an access right which allows write access, e.g. read/write (R/W). Additionally, or alternatively, this can involve adding the recovered memory to a data structure which indicates memory available for use. For example, the memory management unit 51 can maintain a list of parts of the memory 14 which are available for storage of data. For example, this list can indicate a start address of a contiguous block of available memory, or a start address or other identifier of each block (segment) of available memory. When an attempt is later made (e.g. at block 38) to write data to the memory 14, a check is made that data is being written to an address which is available for data storage.

The recover memory code can only be executed once. Following memory recovery, action is taken to prevent a further invocation of the code. This can be achieved in one of various ways, such as by changing a permission of the recover memory code, or by removing the recover memory code from the secure element. These options are explained in more detail later.

Other pre-personalisation can be performed at block 37. This can include writing data of a file system to the memory 14. Block 38 can write data to the memory portion which was recovered at block 33. A personalisation key can be written to the memory 14 during this stage.

Personalisation 40 of the chip comprises writing data to the card which personalises the card for an end user of the card. The first step of personalisation is a mutual authentication with the personalisation key. In the case of a secure element forming part of a smart card, the exterior of the smart card may be printed or embossed with personal details of the end user such as name, account number, expiry date.

Figure 5(B) shows the same memory as Figure 5(A) after a selected application has been removed from the memory 14. In this example, the application selected for removal is the second application (A2), and the memory portion 43 occupied by the second application (A2) has been overwritten with dummy data. A master file (MF) 49 is written to the memory after unlocking the card with the master key (MSK) 44. One of the configuration parameters set when the master file (MF) 49 is created is the number of directory files: this may change from one batch of secure elements to another. In an example, the recover memory code is invoked directly after mutual authentication with the master key and followed directly by creating the master file 49. Once the master file 49 is in place, there is a change in state. In an example, it is not possible to run the recover memory code after the master file 49 has been written, due to the change in state.

Figure 5(C) shows the same memory 14 after additional data has been written to the memory. In this example, a file system occupies a part 45 of the memory portion 43 previously occupied by the second application (A2). As the file system is smaller than the application (A2), the remaining part 46 of the recovered memory portion 43 stores the remainder of the dummy data shown in Figure 5(B). The example of Figure 5 shows a size and an access right 59 associated with each portion of the memory 14. As explained earlier, the access rights for each memory location are held by the memory management unit 51. The access right of portion 43 is changed from an access right which prohibits write access (RO) in Figure 5(A) to an access right which allows write access (R/W) in Figure 5(C). In the example shown in Figure 5 the memory has a size which is insufficient to store the file system 45 after the master file 49. The file system 45 occupies a part of the memory which is recovered.

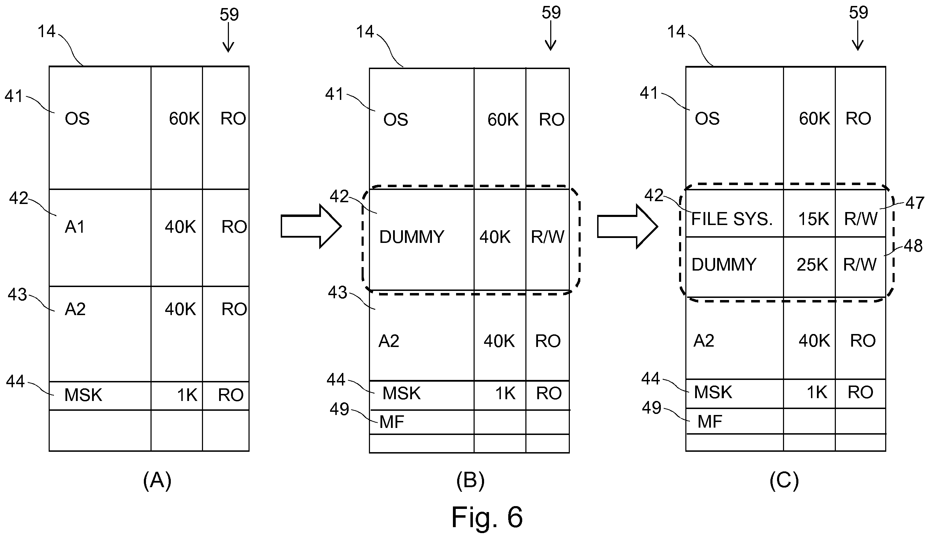

Figure 6 shows another example where the first application (A1) was selected for removal. The memory portion 42 occupied by the first application (A1) has been overwritten with dummy data at Figure 6(B). Figure 6(C) shows the memory 14 after additional data has been written to the memory. In this example, a file system 46 occupies a part 47 of the memory portion 42 previously occupied by the first application (A1). The remaining part 48 of the recovered memory portion 42 stores the remainder of the dummy data shown in Figure 6(B).

In a conventional secure element, physical memory can be laid out in the following order:
OS
A1
A2
MSK
STATE VARIABLES including LOCKS
Master File
Rest of File System

In a secure element according to an example, the memory map (53, Figure 3) is changed so that "Rest of File System" points back to A1 or A2. In effect, the tail of the file system replaces A1 or A2. This allows the chip manufacturer to release chips which are mapped without sufficient space for the "Rest of File System". The rest of the file system does not necessarily occupy a contiguous block of memory. Instead, the "Rest of File System" may be stored within part of the memory occupied by A1 or A2 (as shown in Figures 5 and 6).

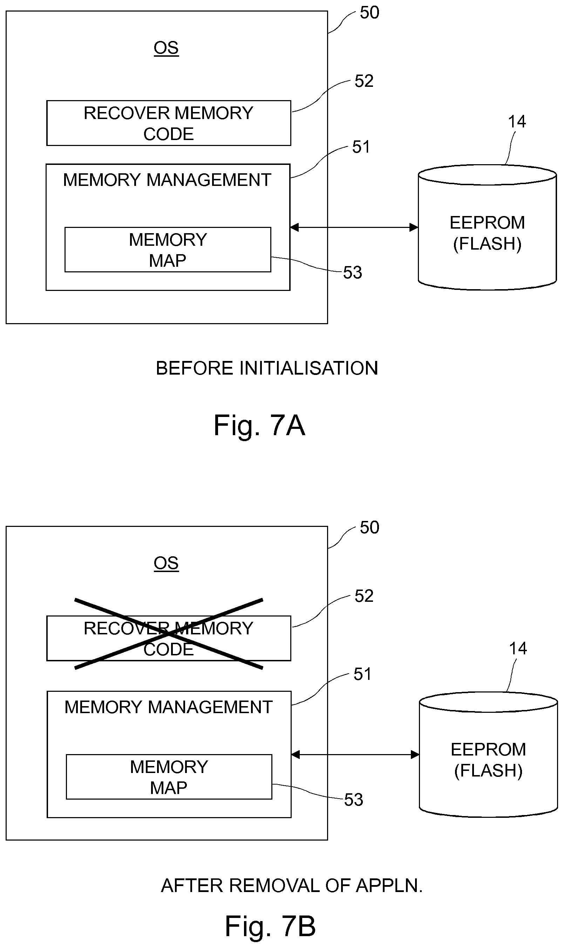

The code which was executed to remove a selected application can only be executed once. There are various ways in which this can be implemented. Figures 7A, 7B show a first option. Figure 7A shows the situation before initialisation. Figure 7B shows the situation after removal of an application. Before initialisation, the secure element stores code 52 for removal of an application. After removal of a selected application at block 33, the code 52 is itself removed from the secure element and therefore can no longer be executed. The code 52 can include a form of coda which removes the code 52 as the last action of the code 52. As shown in Figure 7A, the code 52 can form part of the operating system 50 of the secure element. Alternatively, it can be located elsewhere, such as the command dispatcher, for example.

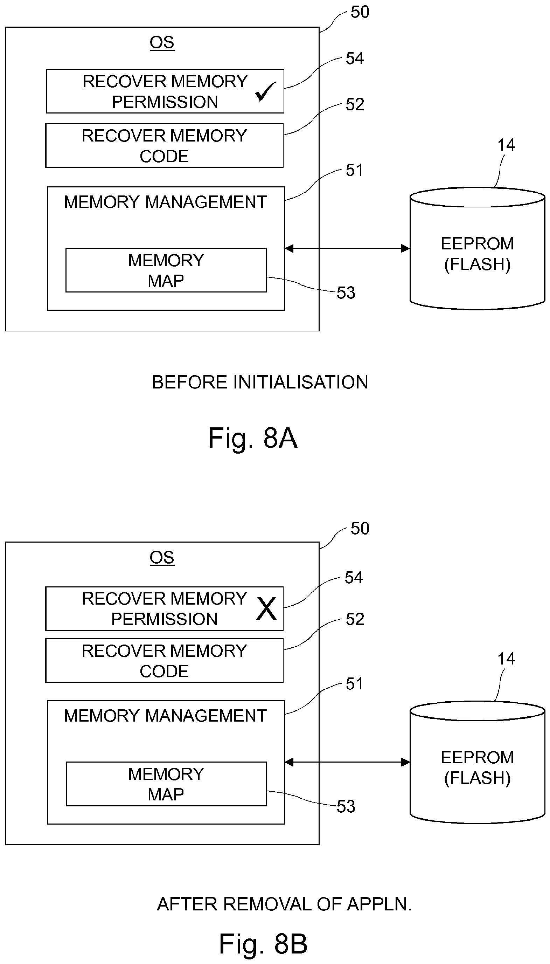

Figures 8A, 8B show a second option. The operating system 50 maintains a permission 54 associated with the code 52 for removal of an application. Before initialisation, the permission 54 allows the code 52 to be executed to remove an application. After removal of a selected application at block 33, the permission 54 is changed to inhibit code 52 from being executed. While a permission has been shown, the operating system may inhibit code 52 in some other way.

The secure element may store more than one instance of the "recover memory" code 52. Each instance of the recover memory code may be associated with a particular set of applications stored in the memory 14. For example, the memory can include a first set of applications (e.g. banking applications) and a second set of applications. A first instance of recover memory code is associated with the first set of applications. A second instance of recover memory code is associated with the second set of applications. When the secure element is initialised, the first instance of the recover memory code operates upon the first set of applications and the second instance of the recover memory code operates upon the second set of applications.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method of preparing a secure element (10), the method being performed as part of a pre-personalisation process (30) of the secure element and comprising:
receiving a secure element (10) in the form of a chip comprising a processor (11) and a non-volatile, re-writable, memory (14);
writing at least one set of at least two applications to the secure element, a first application to a first portion (41) of the memory and a second application to a second portion (42) of the memory;
writing code to the secure element (10) and invoking (33) the code with a parameter indicating the application which is to be removed to recover a memory portion occupied by a selected one of the at least the first application (A1) and the second application (A2), leaving a remaining application in the memory and to make the recovered memory portion available for storage of other data; such that only one of the applications is present in the finalised secure element
wherein the at least two applications of the set are mutually exclusive, and
the method further comprising preventing (36) a further invocation of the code.

2. A method according to claim 1, wherein the preventing (36) comprises one of:
removing the code from the secure element;
changing a permission of the code.

3. A method according to any one of claims 1 or 2, wherein the secure element (10) maintains an access right for the memory portions occupied by each of the applications (A1, A2), the access right prohibiting write access to the memory portions occupied by the applications (A1, A2) before invoking the code, and wherein invoking (33) the code changes the access right for the memory portion occupied by the selected application to permit write access.

4. A method according to any one of claims 1 to 3, wherein invoking (33) the code causes over-writing of the selected one of the first application (A1) and the second application (A2) with dummy data.

5. A method according to any one of claims 1 to 4, wherein the secure element stores an indication of parts of the memory (14) which are available for storage of data and invoking (33) the code updates the indication to include the recovered memory.

6. A method according to any one of claims 1 to 5, wherein the code forms part of an operating system of the secure element.

7. A method according to any one of claims 1 to 6, wherein N applications are stored in the memory (14) of the received secure element, and invoking (33) code stored in the secure element recovers (34) memory portions occupied by N-1 of the applications, leaving a remaining application in the memory.

8. A method according to any one of claims 1 to 7, further comprising writing data (38) to at least part of the recovered memory portion.

9. A method according to claim 8, wherein writing data to the recovered memory portion includes at least one of:
writing a file system to the memory;
writing a security key to the memory.

10. A method according to any one of claims 1 to 9, wherein, before recovering a memory portion occupied by a selected one of the first application (A1) and the second application (A2), the memory has a size which is sufficient to store a master file (49) but insufficient to store a file system and wherein invoking (33) the code stored in the secure element recovers a memory portion which provides sufficient space to store the file system.

11. A secure element (10) in the form of a chip comprising:
a processor (11); and
a non-volatile, re-writable, memory (14) on which have been stored at least one set of at least two applications:
a first application (A1) in a first portion (41) of the memory; and
a second application (A2) in a second portion (42) of the memory;
the secure element being configured to invoke code stored in the secure element with a parameter indicating the application which is to be removed to recover a memory portion occupied by a selected one of the at least two applications (A1, A2), leaving a remaining application in the memory and to make the recovered memory portion available for storage of other data; such that only one of the applications is present in the finalised secure element;
wherein the at least two applications are mutually exclusive, and the secure element being configured to prevent a further invocation of the code wherein the application deletion, the code invocation and the prevention of a further invocation of the code are done as part of a pre-personalization process.

12. A smart card comprising a secure element according to claim 11.

## Patentansprüche

1. Verfahren zur Vorbereitung eines sicheren Elements (10), wobei das Verfahren als Teil eines Vorpersonalisierungsprozesses (30) des sicheren Elements durchgeführt wird und umfasst:
Empfangen eines sicheren Elements (10) in Form eines Chips, der einen Prozessor (11) und einen nichtflüchtigen, wiederbeschreibbaren Speicher (14) umfasst;
Schreiben mindestens eines Satzes von mindestens zwei Anwendungen in das sichere Element, eine erste Anwendung in einen ersten Bereich (41) des Speichers und eine zweite Anwendung in einen zweiten Bereich (42) des Speichers;
Schreiben von Code in das sichere Element (10) und Aufrufen (33) des Codes mit einem Parameter, der die Anwendung angibt, die entfernt werden soll, um einen Speicherbereich wiederherzustellen, der von einer ausgewählten der mindestens ersten Anwendung (A1) und zweiten Anwendung (A2) belegt wird, eine verbleibende Anwendung in dem Speicher belassend, und um den wiederhergestellten Speicherbereich zum Speichern anderer Daten verfügbar zu machen, so dass nur eine der Anwendungen in dem finalisierten sicheren Element vorhanden ist,
wobei sich die mindestens zwei Anwendungen des Satzes gegenseitig ausschließen, und
wobei das Verfahren ferner Verhindern (36) eines weiteren Aufrufs des Codes umfasst.

2. Verfahren nach Anspruch 1, wobei das Verhindern (36) eines umfasst von:
Entfernen des Codes aus dem sicheren Element;
Ändern einer Zugriffsberechtigung des Codes.

3. Verfahren nach einem der Ansprüche 1 oder 2, wobei das sichere Element (10) ein Zugriffsrecht für die von jeder der Anwendungen (A1, A2) belegten Speicherbereiche beibehält, wobei das Zugriffsrecht den Schreibzugriff auf die Speicherbereiche verbietet, die von den Anwendungen (A1, A2) belegt werden, bevor der Code aufgerufen wird, und wobei das Aufrufen (33) des Codes das Zugriffsrecht für den von der ausgewählten Anwendung belegten Speicherbereich ändert, um einen Schreibzugriff zu ermöglichen.

4. Verfahren nach einem der Ansprüche 1 bis 3, wobei das Aufrufen (33) des Codes ein Überschreiben der ausgewählten der ersten Anwendung (A1) und zweiten Anwendung (A2) mit Dummy-Daten bewirkt.

5. Verfahren nach einem der Ansprüche 1 bis 4, wobei das sichere Element eine Angabe von Teilen des Speichers (14) speichert, die zum Speichern von Daten verfügbar sind, und das Aufrufen (33) des Codes die Angabe aktualisiert, um den wiederhergestellten Speicher aufzuweisen.

6. Verfahren nach einem der Ansprüche 1 bis 5, wobei der Code Teil eines Betriebssystems des sicheren Elements ist.

7. Verfahren nach einem der Ansprüche 1 bis 6, wobei N Anwendungen in dem Speicher (14) des empfangenen sicheren Elements gespeichert sind, und Aufrufen (33) von Code, der in dem sicheren Element gespeichert ist, Speicherbereiche wiederherstellt (34), die von N-1 der Anwendungen belegt werden, wobei eine verbleibende Anwendung im Speicher belassen wird.

8. Verfahren nach einem der Ansprüche 1 bis 7, ferner umfassend Schreiben von Daten (38) in mindestens einen Teil des wiederhergestellten Speicherbereichs.

9. Verfahren nach Anspruch 8, wobei ein Schreiben von Daten in den wiederhergestellten Speicherbereich mindestens eines aufweist von:
Schreiben eines Dateisystems in den Speicher;
Schreiben eines Sicherheitsschlüssels in den Speicher.

10. Verfahren nach einem der Ansprüche 1 bis 9, wobei, bevor ein Speicherbereich, der von einer ausgewählten von der ersten Anwendung (A1) und zweiten Anwendung (A2) belegt wird, wiederhergestellt wird, der Speicher eine Größe aufweist, die ausreicht, um eine Hauptdatei (49) zu speichern, jedoch nicht ausreicht, um ein Dateisystem zu speichern, und Aufrufen (33) des in dem sicheren Element gespeicherten Codes einen Speicherbereich wiederherstellt, der ausreichend Platz zum Speichern des Dateisystems bereitstellt.

11. Sicheres Element (10) in Form eines Chips, umfassend:
einen Prozessor (11); und
einen nichtflüchtigen, wiederbeschreibbaren Speicher (14), in dem mindestens ein Satz von mindestens zwei Anwendungen gespeichert ist:
eine erste Anwendung (A1) in einem ersten Bereich (41) des Speichers; und
eine zweite Anwendung (A2) in einem zweiten Bereich (42) des Speichers;
wobei das sichere Element konfiguriert ist, in dem sicheren Element gespeicherten Code mit einem Parameter aufzurufen, der die Anwendung angibt, die entfernt werden soll, um einen Speicherbereich wiederherzustellen, der von einer ausgewählten der mindestens zwei Anwendungen (A1, A2) belegt wird, wobei eine verbleibende Anwendung in dem Speicher belassen wird, und um den wiederhergestellten Speicherbereich zum Speichern anderer Daten verfügbar zu machen: so dass nur eine der Anwendungen in dem finalisierten sicheren Element vorhanden ist;
wobei sich die mindestens zwei Anwendungen gegenseitig ausschließen, und
das sichere Element konfiguriert ist, einen weiteren Aufruf des Codes zu verhindern, wobei das Löschen der Anwendung, der Aufruf des Codes und das Verhindern eines weiteren Aufrufs des Codes als Teil eines Vorpersonalisierungsprozesses durchgeführt werden.

12. Smartcard, die ein sicheres Element nach Anspruch 11 umfasst.

## Revendications

1. Procédé de préparation d'un élément sécurisé (10), le procédé étant réalisé en tant que partie d'un processus de prépersonnalisation (30) de l'élément sécurisé et consistant :
à recevoir un élément sécurisé (10) sous la forme d'une puce comprenant un processeur (11) et une mémoire non volatile réinscriptible (14) ;
à écrire au moins un ensemble d'au moins deux applications dans l'élément sécurisé, une première application dans une première partie (41) de la mémoire et une seconde application dans une seconde partie (42) de la mémoire ;
à écrire un code dans l'élément sécurisé (10) et à invoquer (33) le code avec un paramètre indiquant l'application qui doit être supprimée pour récupérer une partie de mémoire occupée par une application sélectionnée parmi la première application (A1) ou la seconde application (A2), laissant une application restante dans la mémoire et pour rendre la partie de mémoire récupérée disponible pour un stockage d'autres données ; de telle sorte qu'une seule des applications soit présente dans l'élément sécurisé finalisé,
dans lequel les deux, ou plus, applications de l'ensemble sont mutuellement exclusives et
le procédé consistant en outre à empêcher (36) une autre invocation du code.

2. Procédé selon la revendication 1, dans lequel l'empêchement (36) consiste :
soit à supprimer le code de l'élément sécurisé ;
soit à changer une autorisation du code.

3. Procédé selon l'une quelconque des revendications 1 et 2, dans lequel l'élément sécurisé (10) conserve un droit d'accès aux parties de mémoire occupées par chacune des applications (A1, A2), le droit d'accès interdisant un accès en écriture aux parties de mémoire occupées par les applications (A1, A2) avant d'invoquer le code et dans lequel l'invocation (33) du code change le droit d'accès à la partie de mémoire occupée par l'application sélectionnée pour permettre un accès en écriture.

4. Procédé selon l'une quelconque des revendications 1 à 3, dans lequel l'invocation (33) du code provoque un écrasement de l'application sélectionnée parmi la première application (A1) et la seconde application (A2) avec des données factices.

5. Procédé selon l'une quelconque des revendications 1 à 4, dans lequel l'élément sécurisé stocke une indication des parties de la mémoire (14) qui sont disponibles pour un stockage de données et l'invocation (33) du code met à jour l'indication pour inclure la mémoire récupérée.

6. Procédé selon l'une quelconque des revendications 1 à 5, dans lequel le code forme une partie d'un système d'exploitation de l'élément sécurisé.

7. Procédé selon l'une quelconque des revendications 1 à 6, dans lequel N applications sont stockées dans la mémoire (14) de l'élément sécurisé reçu et l'invocation (33) d'un code stocké dans l'élément sécurisé récupère (34) des parties de mémoire occupées par N-1 applications des applications, laissant une application restante dans la mémoire.

8. Procédé selon l'une quelconque des revendications 1 à 7, consistant en outre à écrire des données (38) dans au moins une partie de la partie de mémoire récupérée.

9. Procédé selon la revendication 8, dans lequel l'écriture de données dans la partie de mémoire récupérée consiste :
à écrire un système de ficher dans la mémoire ; et/ou à écrire une clé de sécurité dans la mémoire.

10. Procédé selon l'une quelconque des revendications 1 à 9, dans lequel, avant la récupération d'une partie de mémoire occupée par une application sélectionnée parmi la première application (A1) et la seconde application (A2), la mémoire présente une taille qui est suffisante pour stocker un fichier maître (49) mais insuffisante pour stocker un système de fichier et dans lequel l'invocation (33) du code stocké dans l'élément sécurisé récupère une partie de mémoire qui fournit un espace suffisant pour stocker le système de fichier.

11. Élément sécurisé (10) sous la forme d'une puce comprenant :
un processeur (11) ; et
une mémoire non volatile réinscriptible (14) sur laquelle ont été stockées au moins un ensemble d'au moins deux applications :
une première application (A1) dans une première partie (41) de la mémoire ; et
une seconde application (A2) dans une seconde partie (42) de la mémoire ;
l'élément sécurisé étant configuré pour invoquer un code stocké dans l'élément sécurisé avec un paramètre indiquant l'application qui doit être supprimée pour récupérer une partie de mémoire occupée par une application sélectionnée parmi les deux, ou plus, applications (A1, A2), laissant une application restante dans la mémoire et pour rendre la partie de mémoire récupérée disponible pour un stockage d'autres données ; de telle sorte qu'une seule des applications soit présente dans l'élément sécurisé finalisé,
dans lequel les deux, ou plus, applications sont mutuellement exclusives et
l'élément sécurisé étant configuré pour empêcher une autre invocation du code, dans lequel la suppression d'application, l'invocation de code et l'empêchement d'une autre invocation du code font partie d'un processus de prépersonnalisation.

12. Carte à puce comprenant un élément sécurisé selon la revendication 11.
